# NEUE EUROPÄISCHE PATENTSCHRIFT

(11) **EP 0 920 839 B2**
(45) Veröffentlichungstag und Bekanntmachung des Hinweises auf die Entscheidung über den Einspruch: **19.12.2012**
(45) Hinweis auf die Patenterteilung: 26.04.2006
(21) Anmeldenummer: 98122300.1
(22) Anmeldetag: 24.11.1998
(51) Int. Cl.: A61C 1/08, A61C 1/06, A61C 1/18

(54) **Motorhandstück**
Motor handpiece
Pièce à main à moteur

(30) Priorität: 02.12.1997 DE 19753491
(43) Veröffentlichungstag der Anmeldung: 09.06.1999
(73) Patentinhaber: Kaltenbach & Voigt GmbH, 88400 Biberach / Riss (DE)
(72) Erfinder: Knorpp, Ernst, 88299 Leutkirch (DE); Thaler, Wolfgang, 88299 Leutkirch (DE); Düsing, Josef, 88299 Leutkirch (DE)
(74) Vertreter: Schmidt-Evers, Jürgen

(56) Entgegenhaltungen:
- EP-A- 0 012 871
- EP-A2- 0 012 871
- WO-A1-98/18401
- CH-A5- 649 876
- DE-A- 2 253 880
- DE-A- 2 756 011
- DE-A- 19 644 491
- DE-A1- 2 253 880
- DE-A1- 2 756 011
- DE-A1- 3 527 796
- DE-A1- 4 406 855
- DE-A1- 19 644 491
- FR-A- 2 575 060
- FR-A1- 2 575 060
- JP-A- 61 139 208
- US-A- 3 109 238
- US-A- 3 672 060
- US-A- 3 928 701
- Technikeranweisung KaVo Elektrionisches Werk GmbH, SF Handstück, 1.März 1981
- Prospekt "Was sie schon immer suchten", Bewährte SF-Motorentechnik, Praezident 1995

## Beschreibung

Die vorliegende Erfindung betrifft allgemein ein Motorhandstück zum Antrieb eines mit dem Motorhandstück koppelbaren Werkzeugs. Insbesondere betrifft die vorliegende Erfindung ein Motorhandstück, welches als zahnärztliches Behandlungshandstück oder zahntechnisches Arbeitshandstück verwendet werden kann.

Ein gattungsgemäßes Arbeitshandstück für zahntechnische Zwecke nach dem Oberbegriff des Anspruches 1 ist beispielsweise aus der DE-A1-44 06 855 der Anmelderin bekannt und in Fig. 5a dargestellt.

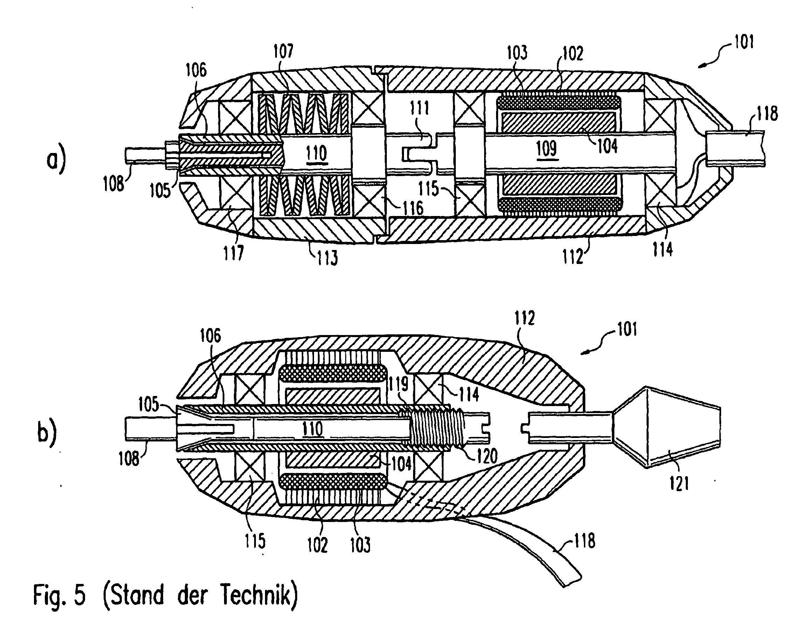

Das in Fig. 5a dargestellte Arbeits - bzw. Motorhandstück 101 umfaßt im wesentlichen zwei Handstückteile 112, 113, wobei in dem Handstückteil 112 ein Motor, im dargestellten Beispiel ein kollektorloser Gleichstrommotor, und in dem anderen Handstückteil 113 ein Schnelleinspannsystem für ein beispielsweise zahntechnisches Werkzeug angeordnet ist. Der kollektorlose Gleichstrommotor umfaßt einen Rückschlußring 102, eine Statorwicklung 103 sowie einen Rotormagnet 104. Dem Motor wird über eine Versorgungsleitung 118 Strom zugeführt. Des weiteren ist der Rotormagnet 104 an einer ersten Welle 109 angebracht, wobei die Welle 109 in dem Handstückteil 112 mit Hilfe zweier Kugellager 114, 115 drehbar gelagert ist. Die Welle 109 wird somit zusammen mit dem Rotormagnet 104 bei Aktivierung des Motors in Rotation versetzt.

Das Schnelleinspannsystem des zweiten Handstückteils 113 umfaßt im wesentlichen eine koaxial in diesem Handstückteil angeordnete, hülsenförmig geschlitzte Spannzange 105, welche mit einer weiteren Antriebswelle 110 gekoppelt bzw. Teil desselben ist. Die Spannzange besitzt an ihrem äußeren Ende eine konische Außenform, die komplementär zu einer entsprechend ausgebildeten konischen Innenform einer Lagerhülse 106 ist, in welcher die Spannzange 105 angeordnet ist. Die Spannzange 105 ist über einen (nicht gezeigten) Betätigungsmechanismus mit dem Gehäuse des zweiten Handstückteils 113 verbunden bzw. gekoppelt. Die beiden Handstückteile 112 und 113 sind mit einander koppelbar, insbesondere verschraubbar. Bevorzugt sind die beiden Handstückteile 112 und 113 in Form eines Bajonetverschlusses miteinander verschraubbar. Der zuvor genannte Betätigungsmechanismus kann beispielsweise eine Anzugstange umfassen, welche bei Verdrehen des Gehäuses des Handstückteiles 113 gegenüber dem Gehäuse des Handstückteils 112 in eine bestimmte Richtung eine axiale Verschiebung der Spannzange 105 nach rechts hervorruft, wobei mit zunehmender Längsverschiebung der Spannzange 105 diese aufgrund der komplementär ausgebildeten Außen- bzw. Innenformen der Spannzange 105 bzw. der Lagerhülse 106 zusammengedrückt wird, so daß ein in der Spannzange 105 befindliches Werkzeug 108, von dem in Fig. 5a lediglich der Werkzeugschaft angedeutet ist, kraftschlüssig in der Spannzange 105 eingespannt wird. Dabei erfolgt die Längsverschiebung der Spannzange 105 nach rechts entgegen einer Federkraft einer in Fig. 5a schematisch dargestellten Feder 107, die beispielsweise eine Teller- oder Spiralfeder sein kann. Eine Relativverdrehung des Handstückteils 113 gegenüber dem Handstückteil 112 in entgegengesetzte Richtung führt entsprechend zu einer Längsverschiebung der Spannzange 105 nach links, welche durch die Federkraft der Feder 107 unterstützt wird. Dieser Einspannmechanismus wird allgemein als Drehgriff-Schnellspannmechanismus bezeichnet. Hinsichtlich weiterer Einzelheiten bezüglich des Einspannmechanismust sei auf die DE-A1-44 06 855 verwiesen.

Selbstverständlich kann der zuvor erläuterte Drehgriff-Schnellspannmechanismus auch derart ausgestaltet sein, daß anstelle der Lagerhülse 106 die Spannzange 105 unbeweglich angeordnet ist, während im Gegensatz zu Fig. 5a die Lagerhülse 106 in Übereinstimmung mit der Relatiwerdrehung des Handstückteils 113 gegenüber dem Handstückteil 112 in Längsrichtung verschoben wird.

Aus Fig. 5a ist ersichtlich, daß die beiden Handstückteile 112 und 113 jeweils eigene Antriebswellen 109, 110 aufweisen, welche einerseits jeweils mit Hilfe zweier Kugellager 114, 115 bzw. 116, 117 drehbar gelagert und andererseits über ein mechanisches Mimehmersystem 111 miteinander gekoppelt sind.

Bei dem in Fig. 5a gezeigten Motorhandstück kommt es jedoch insbesondere bei höheren Drehzahlen aufgrund nicht vermeidbarer Fluchtungsfehler infolge der mechanischen Ankopplung der beiden Antriebswellen 109, 110 zu einer deutlich erhöhten Geräuschentwicklung. Des weiteren sind für dieses Motorhandstück insgesamt vier Kugellager 114-117 erforderlich, die insbesondere bei Verwendung von kolletorlosen Gleichstrommotoren ohne zusätzliche Kühllüfter erwärmungsmäßig die Drehzahl begrenzen. Auf zusätzliche Kühllüfter soll jedoch wegen der gewünschten Geräuschminimierung verzichtet werden. Die maximale Drehzahlgrenze des in Fig. 5a gezeigten Motorhandstücks für ein noch akzeptable Geräusch- und Wärmeentwicklung liegt derzeit bei ca. 40.000 - 50.000 min⁻¹ .

Aufgrund der beiden über das mechanische Mitnehmersystem 111 aneinander gekoppelten Antriebswellen 109, 110 kommt es im Laufe der Zeit zu einem verstärkten Verschleiß der beiden Antriebswellen 109, 110 im Bereich des Mitnehmersystems 111. Des weiteren treten während des Betriebs des Motorhandstücks 101 verstärkt Vibrationen auf, da aufgrund der Verwendung der beiden separaten Antriebswellen 109, 110 die Gesamtsteifigkeit der Wellenanordnung relativ gering ist. Derartige Vibrationen können jedoch beim Benutzer das sog. Weißfinger-Syndrom hervorrufen. Dabei wird bei dem Benutzer, der das Motorhandstück 101 beispielsweise im Bereich des Motorhandstückteils 113 mit seinen Fingerspitzen hält, das Blut von den Fingerspitzen weg gedrückt, wodurch die Fingerspitzen weiß werden.

Fig. 5b zeigt ein weiteres bekanntes Motorhandstück, welches beispielsweise von der Anmelderin unter der Bezeichnung "SF-Motorspindeltyp 4010" vertrieben wird. Das in Fig. 5b gezeigte Motorhandstück 101 besitzt ein einteiliges Gehäuse 112, in dem wiederum ein Motor, beispielsweise ein Drehstromasynchronmotor oder ein kollektorloser Gleichstrommotor mit einem Rückflußring 102, einer Statorwicklung 103 und einem Rotormagnet 104, angeordnet ist. Wie in Fig. 5a ist auch bei dem Motorhandstück 101 gemäß Fig. 5b der Rotormagnet 104 auf einer Antriebswelle 106 angebracht. Diese Antriebswelle 106 ist als Hohlwelle ausgestaltet und besitzt an ihrem werkzeugseitigen Ende eine konische Innenform, welche analog zu Fig.5a komplementär zu der konischen Außenform einer hülsenförmig geschlitzten Spannzange 105 ausgebildet ist. Diese Spannzange 105 ist wiederum Teil eines Werkzeugeinspannsystems, welches innerhalb der Hohlwelle 106 angeordnet ist. Die Spannzange 105 ist zu diesem Zweck einteilig mit einer weiteren Antriebswelle 110 ausgestaltet oder mit dieser gekoppelt, wobei die Antriebswelle 110 die an ihrem anderen Ende ein Außengewinde 120 aufweist, welches in ein Innengewinde der Hohlwelle 106 eingreift. Im Motorstillstand kann die Antriebswelle 110 mit der Spannzange 105 durch einen am hinteren Teil des Motorhandstücks 101 befindlichen Drehknopf 121 betätigt, d.h. in Längsrichtung in die Hohlwelle 106 hinein - bzw. herausgeschraubt werden . Aufgrund der konischen Außenform der Spannzange 105, welche komplementär zu der konischen Innenform der Hohlwelle 106 ausgebildet ist, wird die Spannzange 105 bei Hineinschrauben der Spannzange 105 mit der Antriebswelle 110 in die Hohlwelle 106 zusammengedrückt, wodurch ein in der Spannzange 105 befindliches Werkzeug 108, von dem in Fig. 5b lediglich der Werkzeugschaft angedeutet ist, kraftschlüssig von der Spannzange 105 gehalten wird. Entsprechend wird bei Herausschrauben der Spannzange 105 aus der Hohlwelle 106 das Werkzeug 108 wieder von der Spannzange 105 gelöst. Das in Fig. 5b gezeigte Motorhandstück 101 ist beispielsweise für Motordrehzahlen im Bereich 60.000 min⁻¹ geeignet.

Das in Fig. 5b gezeigte Motorhandstück 101 besitzt einen einteiligen Aufbau und hat daher den Vorteil, daß die Hohlwelle 106 lediglich mit Hilfe zweier Kugellager 114, 115 gelagert werden muß. Obwohl infolge der Schraubverbindung zwischen dem Innengewinde 119 und dem Außengewinde 120 analog zu Fig. 5a die eine Antriebswelle 106 mit der anderen Antriebswelle 110 mechanisch gekoppelt ist, ist bei dem in Fig. 5b gezeigten Motorhandstück 101 kein Mitnehmersystem 111 der in Fig. 5a gezeigten Art erforderlich. Dadurch läßt sich der durch die Lager 114, 115 und den Motor 102 - 104 gegebene Spielraum in Bezug auf die erreichbare Drehzahl voll ausnützen. Standardmäßig wird jedoch für das in Fig. 5b gezeigte Motorhandstück ein Drehstromasynchronmotor eingesetzt, der aus Wirkungsgradgründen sowie bezüglich der erreichbaren. Drehzahlen einen Kühllüfter benötigen. Dieser erzeugt ein relativ hohes Geräuschniveau insbesondere in hohen Drehzahlbereichen. Des weiteren ist das Werkzeugeinspannsystem des in Fig. 5b gezeigten Motorhandstücks 101 aus ergonomischer Sicht umständlich, da zum Einspannen des Werkzeugs 108 ein zusätzlicher Drehknopf 121 benötigt wird, der von Hand betätigt werden muß.

Der vorliegenden Erfindung liegt daher die Aufgabe zugrunde, ein verbessertes Arbeitshandstück zu schaffen, bei dem die zuvor beschriebenen Probleme der bekannten Arbeitshandstücke nicht auftreten.

Insbesondere soll ein Arbeitshandstück geschaffen werden, welches die vorteile der zuvor erläuterten bekannten Arbeitshandstücke miteinander vereint, einfach handhabbar ist, montagefreundlich, fertigungsgünstig und kompakt aufgebaut ist und eine übermäßige Geräuschentwicklung auch bei hohen Drehzahlen vermeide.

Die zuvor genannten Aufgaben werden gemäß der vorliegenden Erfindung durch ein Arbeitshandstück mit den Merkmalen des unabhängigen Anspruchs 1, gelöst. Die Unteransprüche beschreiben bevorzugte und vorteilhafte Ausführungsbeispiele des erfindungsgemäßen Arbeitshandstücks.

Das erfindungsgemäße Arbeitshandstück weist wie die eingangs beschriebenen Motorhandstücke einen Motor sowie einen Einspannmechanismus zum kraftschlüssigen Einspannen eines Werkzeugs auf, wobei jedoch gemäß der vorliegenden Erfindung der Motor sowie der Einspannmechanismus auf ein und dieselbe einstückig ausgestaltete Welle aufgesetzt sind. Diese Welle muß im Prinzip nur noch mit Hilfe zweier Kugellager gelagert werden, so daß die Reibungsverluste zwischen den Lagern und der Welle sowie die Laufgeräusche reduziert werden können. Des weiteren ist die Wellensteifigkeit der Gesamtanordnung im Vergleich zu zwei miteinander gekoppelten Wellen größer und der Verschleiß der Welle geringer. Ebenso kann das erfindungsgemäße Arbeitshandstück kompakter, montagefreundlicher und fertigungsgünstiger mit geringeren Herstellungskosten aufgebaut werden. Übermäßige Vibrationen während des Betriebs des Motorhandstücks werden infolge der einstückig ausgestalteten Welle vermieden.

Um auch bei hohen Drehzahlen die Verluste gering zu halten, kann der Motorwirkungsgrad minimiert werden. Der Einsatz eines Kühllüfters ist nicht erforderlich, so daß auch hierdurch keine zusätzlichen Geräusche entstehen können. Ebenso ist kein mechanisches Mitnehmersystem erforderlich, wodurch Kupplungsgeräusche vermieden werden können. Das erfindungsgemäße Arbeitshandstück erlaubt eine Kugellageranordnung, die beispielsweise im Reparaturfall einen äußerst einfachen Austausch der einzelnen Kugellager ermöglicht, da die Kugellager einfache von außen zugänglich sind. Das erfindungsgemäße Arbeitshandstück weist das eingangs beschriebene und besonders benutzerfreundliche Drehgriffschnellspannsystem auf, wobei zu diesem Zweck das Arbeitshandstück zweiteilig aufgebaut ist und durch Relativbewegung des einen Handstückteils gegenüber dem anderen Handstückteil ein Werkzeug einfach eingespannt werden kann.

Die vorliegende Erfindung wird nachfolgend anhand bevorzugter Ausführungsbeispiele unter Bezugnahme auf die beigefügte Zeichnung näher erläutert.
- Fig. 1a - 1d: zeigen verschiedene Varianten eines ersten Ausführungsbeispiels eines Arbeitshandstücks, wobei die Varianten der Fig. 1a, 1c und 1d nicht Gegenstand der Ansprüche sind,
- Fig. 2a - 2d: zeigen verschiedene Varianten eines zweiten Ausführungsbeispiels eines Arbeitshandstücks, welches nicht Gegenstand der Ansprüche ist,
- Fig. 3a - 3e: zeigen verschiedene Varianten eines dritten Ausführungsbeispiels eines Arbeitshandstücks, wobei die Varianten der Fig. 3c, 3d und 3e nicht Gegenstand der Ansprüche sind,
- Fig. 4: zeigt ein Arbeitshandstück, welches nicht Gegenstand der Ansprüche ist, und
- Fig. 5a und 5b: zeigen bekannte Motorhandstücke.

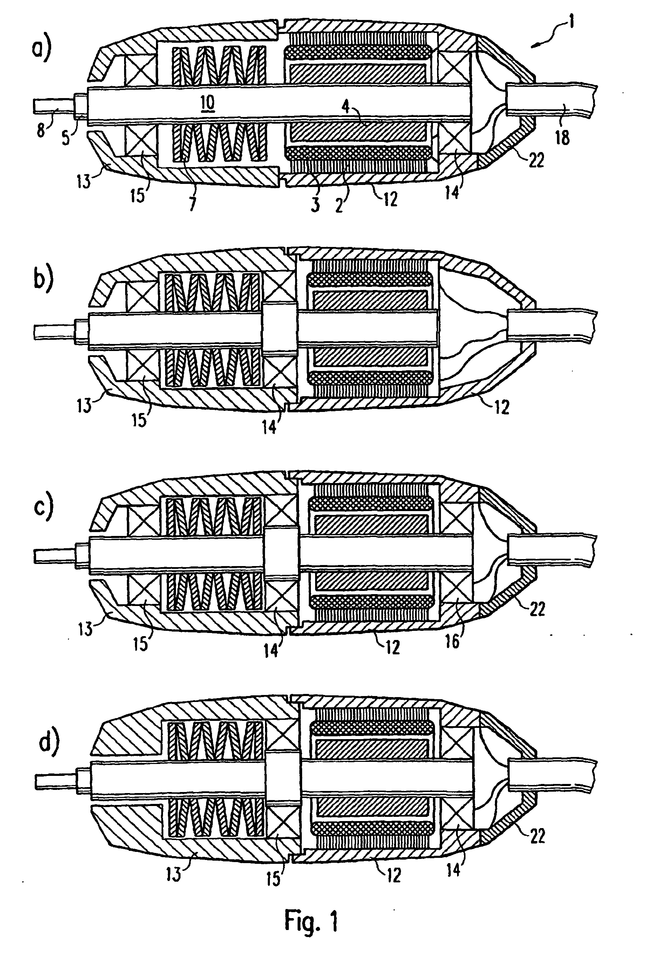

Fig. 1a - 1d zeigen verschiede, Varianten eines Arbeits - bzw. Motorhandstücks. Wie nachfolgend näher erläutert wird, ist gemäß diesem ersten Ausführungsbeispiel der vorliegenden Erfindung das Motorhandstück zweiteilig aufgebaut, wobei sich ein Einspannsystem für ein von dem Motorhandstück anzutreibendes Werkzeug in dem einen Handstückteil und ein Motor in dem anderen Handstückteil befindet. Der Motor sowie der Einspannmechanismus sind an ein und derselben Welle angebracht, die einstückig ausgebildet ist. Der Einspannmechanismus für das Werkzeug ist insbesondere als Drehgriffschnellspannsystem ausgebildet, d.h. ein in den Einspannmechanismus eingeführtes Werkzeug wird automatisch durch Verdrehen des dem Einspannmechanismus zugeordneten Handstückteils gegenüber dem dem Motor zugeordneten Handstückteil kraftschlüssig eingespannt, so daß die Rotationsbewegung des Motors über die einstückige Welle auf das eingespannte Werkzeug übertragen werden kann.

In Fig. 1a ist ein Motorhandstück 1 dargestellt, welches aus zwei miteinander koppelbaren Handstückteilen 12 und 13 besteht. In dem Handstückteil 12 ist der bereits zuvor erläuterte Motor angeordnet, der in dem dargestellten Beispiel in Form eines kollektorlosen Gleichstrommotores mit einem beispielsweise aus geblechtem Eisen gefertigten Rückschlußring 2, einer Statorwicklung 3 sowie einem Rotormagnet 4 ausgebildet ist. Der Rotormagnet 4 kann beispielsweise ein zweipolig diametral magnetisierter Permanentmagnet sein. Wie das Handstückteil 12 sind auch der Rückschlußring 2, die Statorwicklung 3 sowie der Rotormagnet 4 im wesentlichen rotationssymmetrische ausgebildet und besitzen jeweils eine zylindrische Form. Der Rotormagnet 4 ist auf eine Antriebswelle 10 kraftschlüssig aufgesetzt, so daß durch die Rotation des Rotornnagnets 4 die Antriebswelle 10 angetrieben wird. Der kollektorlose Gleichstrommotor wird über eine Versorgungsleitung 18 mit Strom versorgt, wobei die Versorgungsleitung 18 durch eine Öffnung am versorgungsleitungseitigen Ende des Motorhandstücks 1 in das Innere des Handstückteils 12 geführt ist. Am versorgungsleitungseitigen Ende des Handstückteils 12 befindet sich ein Kugellager 14, an dem die Antriebswelle 10 drehbar gelagert ist. Das Handstückteil 12 weist an seinem versorgungsleitungseitigen Ende eine abnehmbare Abdeckung 22 auf, so daß vom versorgungsleitungseitigen Ende des Motorhandstücks 1 das Kugellager 14 leicht zugänglich ist und dementsprechend im Reparaturfall einfach ausgewechselt werden kann.

Das zweite Handstückteil 13 umfaßt den bereits zuvor erwähnten Einspannmechanismus. Dieser Einspannmechanismus ist bei den in der Zeichnung dargestellten Ausführungsbeispielen als Schnelleinspannmechanismus analog zu Fig. 5a aufgebaut. D.h. auch bei den nachfolgend erläuterten Beispielen ist beispielsweise eine Spannzange 5 vorgesehen, die bei Verdrehen des Handstückteils 13 gegenüber dem Handstückteil 12 in Längsrichtung relativ zu der Außenhülle der Welle 10 verschoben werden kann, so daß ein Werkzeug 8, z.B. ein dentales Werkzeug, welches sich in der Spannzange 5 befindet, einfach durch Verdrehen des als Drehgriff dienenden Handstückteils 13 kraftschlüssig eingespannt werden kann. Analog zu Fig. 5a ist wiederum ein elastisches Mittel 7, insbesondere eine Feder, vorgesehen, gegen deren Federkraft die Spannzange 5 in das Handstückteil 13 hineinbewegt und das Werkzeug 8 eingespannt wird. Hinsichtlich der genaueren Funktionsweise dieses Einspannmechanismus sei an dieser Stelle auf die Erläuterungen zu Fig. 5a verwiesen. Während Fig. 5a eine Teilquerschnittsansicht dieses Einspannmechanismus darstellt, zeigt Fig. 1 lediglich eine Außenansicht der Antriebswelle 10 mit dem daraus hervorragenden Abschnitt der Spannzange 5 sowie die Feder 7. Die Feder 7 kann beispielsweise als Teller- oder Spiral-Wendelfeder aufgebaut sein und ist - wie bereits anhand Fig. 5a erläutert worden ist - derart mit der Spannzange 5 gekoppelt, daß sie bei Hineinziehen der Spannzange 5 in das Handstückteil 13 infolge einer Relativdrehung des Handstückteils 13 gegenüber dem Handstückteil 12 zusammengedrückt wird.

Wie Fig. 1a zu entnehmen ist, ist die Antriebswelle 10 auch in dem Handstückteil 13 an dessen werkzeugseitigen Ende mit Hilfe eines Kugellagers 15 drehbar gelagert. Insgesamt wird somit ein Einwellensystem mit lediglich zwei Kugellagern 14,15 für das gesamte Motorhandstück 1 gebildet, wobei jedoch weiterhin ein Werkzeugschnelleinspannmechanismus (Drehgriffschnelleinspannmechanismus) verwendet wird.

Der in Fig. 1a dargestellte kollektorlose Gleichstrommotor (ohne Stellungsmelder) ist derart aufgebaut, daß die Statorwicklung 3 fest oder steckbar der Versorgungsleitung 18 und der Rotormagnet 4 fest oder aufschraubbar der Antriebswelle 10 zugeordnet ist. Dadurch ist eine einfache Aufteilung und Trennung des gesamten Motorbereichs in die Versorgungsleitung 18 und den Motorhandstückabschnitt möglich. Insgesamt wird mit Hilfe des erfindungsgemäßen Motorhandstücks eine optimale Minimierung der Außenabmaße sowie des Gewichts des Motorhandstücks erzielt. Des weiteren kann mit Hilfe des erfindungsgemäßen Einwellensystems ein Lagerwechsel vor Ort einfach durchgeführt werden.

Fig. 1b zeigt ein erstes Ausführungsbeispiel eines erfindungsgemäßen Motorhandstücks. Analog zu Fig. 1a ist wiederum der Motor im Handstückteil 12 und der Einspannmechanismus im Handstückteil 13 untergebracht, wobei der Motor und der Einspannmechanismus auf ein und dieselbe Welle aufgesetzt sind. Im Gegensatz zu Fig. 1a befinden sich jedoch beide Kugellager 14,15 im Handstückteil 13, welches dem Einspannmechanismus zugeordnet ist. Insbesondere sind die beiden Kugellager 14,15 an gegenüberliegenden Endabschnitten des Handstückteils 13 angeordnet, wobei die Feder des Einspannmechanismus zwischen den beiden Kugellagern 14,15 untergebracht ist. Die Antriebswelle mit dem daran angebrachten Rotormagnet ragt freitragend in die Statorwicklung des Gleichstrommotors hinein und ist gemäß Fig. 1b nicht über ein weiteres Stützlager in dem Gehäuseteil 12 abgestützt.

Fig. 1c und 1d zeigen weitere Varianten des ersten Beispiels. Das Motorhandstück gemäß Fig. 1c entspricht der in Fig. 1b dargestellten Variante, wobei jedoch zusätzlich ein drittes Kugellager 16 am versorgungsleitungseitigen Ende des Handstückteils 12 vorgesehen ist. Analog zu Fig. 1a besitzt das Handstückteil 12 wiederum eine abnehmbare Abdeckung, so daß auch das dritte Kugellager 16 von außen einfach zugänglich ist. Die in Fig. 1d gezeigte Variante geht auf das in Fig. 1a dargestellte Motorhandstück zurück, wobei wiederum jeweils ein Kugellager 14 bzw. 15 in dem Handstückteil 12 welches dem Elektromotor zugewiesen ist, bzw. dem Handstückteil 13, welches dem Einspannmechanismus zugeordnet ist, vorhanden ist. Während wie in Fig. 1a das erste Kugellager 14 am versorgungsleitungseitigen Ende des Handstückteils 12 untergebracht ist, befindet sich nunmehr das Kugellager 15 an demjenigen Ende des Handstücks 13, welches dem Handstück 12 gegenüberliegt. Auch in Fig. 1d ist eine abnehmbare Abdeckung 22 vorgesehen, so daß das Kugellager 14 einfach ausgewechselt werden kann.

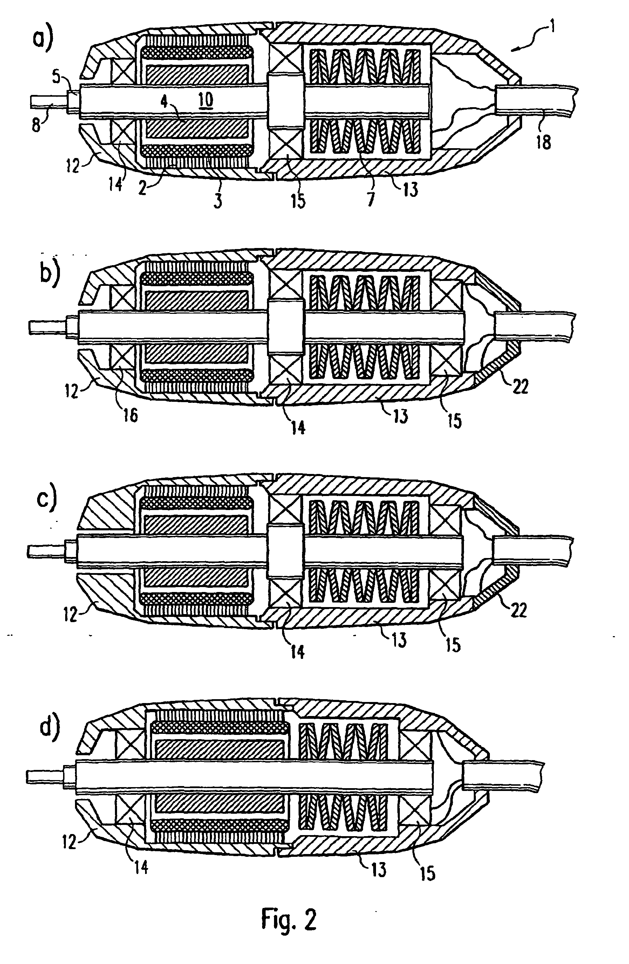

Fig. 2a - 2d zeigen verschiedene Varianten eines zweiten Beispiels. Dieses zweite Beispiel entspricht im wesentlichen dem ersten Ausführungsbeispiel, wobei jedoch im Gegensatz zu Fig. 1 der Einspannmechanismus bzw. die Feder 7 dieses Einspannmechanismus in dem versorgungsleitungseitigen Handstückteil untergebracht ist, während der kollektorlose Gleichstrommotor in dem werkzeugseitigen Gehäuseteil angeordnet ist.

Fig. 2a zeigt dabei diejenige Variante, die der in Fig. 1d dargestellten Variante entspricht. Das Handstückteil 13, in dem der Einspannmechanismus bzw. die Feder 7 des Einspannmechanismus untergebracht ist, weist an seinem einen Ende eine Öffnung auf, in die die Versorgungsleitung 18 hineinragt, welche die Statorwicklung 3 des kollektorlosen Gleichstrommotors mit Strom versorgt, falls das Handstückteil 12 mit dem Handstückteil 13 gekoppelt worden ist. Der anhand Fig. 5a erläuterte Betätigungsmechanismus des Einspannsystems, der infolge eines Verdrehens der beiden Gehäuseteile 12 und 13 gegeneinander dazu führt, daß die hülsenförmig geschlitzte Spannzange 5 in das Motorhandstück 1 hineinverschoben und dementsprechend zusammengedrückt wird, befindet sich zusammen mit der Feder 7 in dem Handstückteil 13. Der Einspannmechanismus ist wiederum mit dem Gleichstrommotor über ein und dieselbe Welle 10 verbunden, die einteilig bzw. einstückig ausgebildet und lediglich an zwei Lagerstellen 14,15 drehbar gelagert ist. Das eine Kugellager 14 befindet sich dabei am werkzeugseitigen Ende des Handstückteils 12, während sich das andere Kugellager 15 an demjenigen Endabschnitt des Handstückteils 13 befindet, welches dem Handstückteil 12 zugewandt ist.

Fig. 2b zeigt eine Variante des in Fig. 2a dargestellten Motorhandstücks, wobei das in Fig. 2b dargestellte Motorhandstück dem in Fig. 1c dargestellten Aufbau entspricht, d.h. es ist neben den Kugellagern 14,15 ein drittes Kugellager 16 zur Abstützung der Antriebswelle 10 vorgesehen. Da in den Ausführungsformen gemäß Fig. 2 die Anordnung des Gleichstrommotors und den Einspannmechanismus gegenüber den Ausführungsformen von Fig. 1 vertauscht angeordnet ist, befindet sich gemäß Fig. 2b das dritte Kugellager 16 am werkzeugseitigen Ende des Handstückteils 12. Gemäß Fig. 2b ist am versorgungsleitungseitigen Ende des Handstückteils 13 das eine Kugellager 15 angeordnet. Aus diesem Grund weist das Handstückteil 13 eine abnehmbare Abdeckung 22 auf, so daß das Kugellager 15 einfach von der Versorgungsleitungseite her zugänglich und auswechselbar ist.

Fig. 2c und Fig. 2d zeigen Anordnungen des zweiten Ausführungsbeispiels des Motorhandstücks, die den in Fig. 1b bzw. 1a dargestellten Anordnungen entsprechen, wobei jedoch wiederum die Anordnung des Gleichstrommotors und des Einspannmechanismus im Vergleich zu Fig. 1 vertauscht ist, d.h. der Einspannmechanismus befindet sich jeweils in demjenigen Handstückteil, welches mit der Versorgungsleitung 18 verbunden ist, während der Gleichstrommotor in demjenigen Handstückteil untergebracht ist, in welchem das Werkzeug 8 eingespannt wird. Bei der Variante gemäß Fig. 2c sind die beiden Kugellager 14 und 15 jeweils in dem Handstückteil 13 an gegenüberliegenden Enden desselben angeordnet, so daß die Antriebswelle freitragend in die Statorwicklung des Gleichstrommotors des Handstückteils 12 hineinragt. Gemäß Fig. 2d sind hingegen die beiden Kugellager 14 und 15 an den jeweils äußeren Enden der Handstückteile 12 und 13 untergebracht, was zu einer größtmöglichen Schwingungssteifigkeit der Antriebswelle führt.

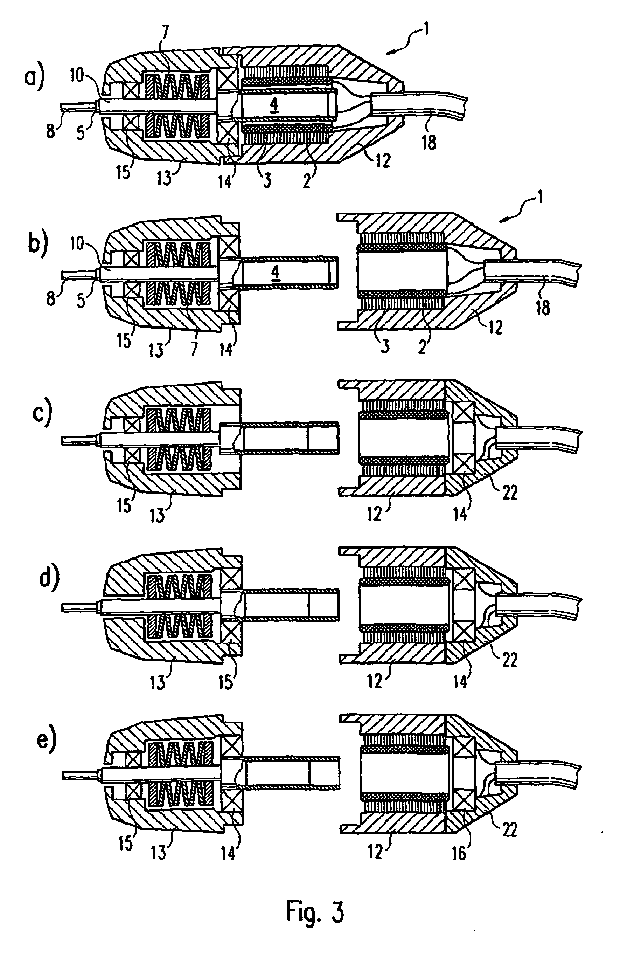

Fig. 3a - 3e zeigen verschiedene Varianten eines Motorhandstücks gemäß einem dritten Beispiel .

Die einzelnen in Fig. 3a - 3e dargestellten Varianten entsprechen im wesentlichen den in Fig. 1a- 1d dargestellten Varianten, wobei gemäß dem dritten Beispiel jedoch im Gegensatz zu Fig. 1 der Rotormagnet 4 in einem Hohlraum der Antriebswelle 10 untergebracht ist.

Fig. 3a zeigt eine erste Variante des dritten Ausführungsbeispiels der vorliegenden Erfindung im zusammengesetzten Zustand, d.h. in einem Zustand, wo die beiden Handstückteile 12 und 13 miteinander verschraubt sind, während Fig. 3b die entsprechende Variante mit auseinandergezogenen Handstückteilen 12 und 13 darstellt. Insbesondere aus Fig. 3b ist ersichtlich, daß die Antriebswelle 10 freitragend von dem Handstückteil 13 hervorsteht und durch zwei Kugellager 14 und 15 in dem Handstückteil 13 gehalten wird, wobei durch Zusammensetzen der beiden Handstückteile 12 und 13 derjenige Abschnitt der Antriebswelle 10, in dem der Rotormagnet 4 untergebracht ist, in die Statorwicklung 3 des kollektorlosen Gleichstrommotors eingeführt wird. Der Statorwicklung 3 wird über die Versorgungsleitung 18 Strom zugeführt, wodurch der kraftschlüssig innerhalb der Antriebswelle 10 untergebrachte Rotormagnet 4 in Rotation versetzt und gleichzeitig die Antriebswelle 10 angetrieben wird. Der Einspannmechanismus kann analog zu den in Fig. 1,2 und 5a dargestellten Motorhandstücken aufgebaut sein.

Fig. 3c zeigt eine Variante, wobei die beiden Kugellager 14 und 15 analog zu Fig. 1a angeordnet sind, d.h. es befindet sich jeweils ein Kugellager am äußeren Ende der Handstückteile 12 und 13. Wie in Fig. 3c gezeigt ist, kann das am versorgungsleitungseitigen Ende angeordnete Kugellager 14 auch in der abnehmbaren Abdeckung 22 untergebracht sein, so daß auch in diesem Fall eine einfache Zugänglichkeit des Kugellagers 14 gewährleistet ist.

Fig. 3d und 3e zeigen weitere Varianten, wobei die Anordnung der Kugellager den in Fig. 1d bzw. 1c dargestellten Kugellageranordnungen entspricht. Sowohl in Fig. 3d als auch in Fig. 3e ist das versorgungsleitungseitige Kugellager 14 bzw. 16 in der abnehmbaren Abdeckung 22 des Handstückteils 12 untergebracht. Während gemäß der in Fig. 3d dargestellten Variante lediglich zwei Kugellager 14, 15 verwendet werden, ist gemäß Fig. 3e die Antriebswelle durch insgesamt drei Kugellager 14, 15, 16 abgestützt.

Abschließend sei erwähnt, daß des Prinzip der vorliegenden Erfindung sowohl auf zahntechnische Arbeitshandstücke als auch auf zahnärztliche Behandlungshandstücke angewendet werden kann. Häufig sind jedoch zahnärztliche Behandlungshandstücke winkelig ausgestaltet, so daß die erfindungsgemäß vorgeschlagene Einstückigkeit der Welle in diesem Fall nur auf den Kernbereich eines derartigen zahnärztlichen Behandlungshandstücks zutreffen kann.

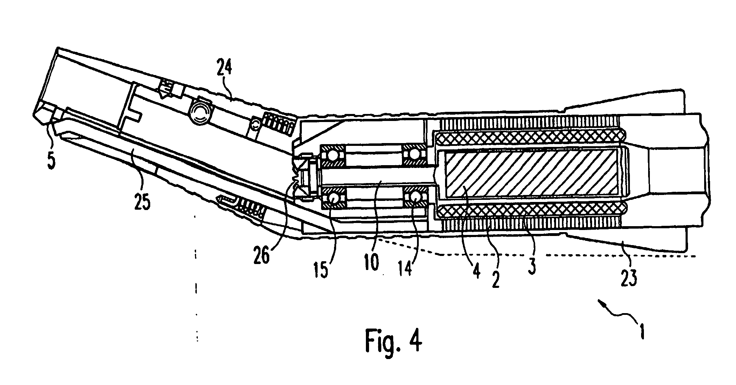

Fig. 4 zeigt ein Beispiel eines Motorhandstücks 1 mit einem ersten Gehäuseabschnitt 23 und einem abgewinkelten zweiten Gehäuseabschnitt 24. In dem ersten Gehäuseabschnitt 23 ist der Motor 2-4 untergebracht, während in dem zweiten Gehäuseabschnitt 24 ein beliebiger Kopplungsmechanismus 5 zur Aufnahme eines (zahnärztlichen) Werkzeugs vorgesehen ist. Im Prinzip kann dieser Kopplungsmechanismus analog zu den vorhergehenden Ausführungsbeispielen durch einen Schnelleinspannmechanismus gebildet sein, wobei beispielsweise durch Verdrehen des zweiten Gehäuseabschnittes 24 ein Werkzeug automatisch eingespannt werden kann. Hinsichtlich weiterer Einzelheiten zu der Funktionsweise und/oder dem Aufbau eines derartigen Schnelleinspannmechanismus sei an dieser Stelle auf die Beschreibung zu den vorhergehenden Ausführungsbeispielen verwiesen.

Aufgrund der winkeligen Ausgestaltung des in Fig. 4 gezeigten Motorhandstücks muß zwangsläufig im Bereich der Abwinkelung beispielsweise über ein Getriebe 26 eine (nicht gezeigte) weitere Welle an die im geraden Gehäuseabschnitt 23 angeordnete einteilige Antriebswellenanordnung 10 angekoppelt werden. Diese einteilige Welle 10 im Kernbereich des Motorhandstücks 1 trägt gemäß der vorliegenden Erfindung demnach einerseits den Motor bzw. dessen Rotormagnet 4 sowie andererseits das Getriebe 26 und ist wiederum lediglich über zwei Kugellager 14,15 in dem Motorhandstück 1 gelagert.

Das in Fig. 4 gezeigte Motorhandstück 1 weist vorzugsweise derartige Trennstellen auf, daß die beiden Kugellager 14,15 bei Zerlegen des Handstücks einfach zugänglich sind, um diese auszutauschen. Wie in Fig. 4 gezeigt ist, weist das Motorhandstück 1 für zahnärztliche Zwecke auch einen Kanal 25 auf, um einer Behandlungsstelle z.B. Licht, Sprühluft oder Sprühwasser zuzuführen.

## Patentansprüche

1. Zahntechnisches Arbeitshandstück (1) zum Betreiben eines mit dem Arbeitshandstück (1) an seinem vorderen Ende koppelbaren Werkzeugs (8),
mit einem Elektromotor (2-4),
mit einem Einspannmechanismus (5, 7), der ein elastisches Mittel (7) aufweist,
entgegen dessen Federkraft das Werkzeug (8) in dem Einspannmechanismus (5, 7) kraftschlüssig einspannbar ist,
und mit einer Wellenanordnung (10), um eine Rotationsbewegung des Elektromotors (2-4) über den Einspannmechanismus (5, 7) auf das eingespannte Werkzeug (8) zu übertragen,
wobei das Arbeitshandstück (1) mit einem hinteren Handstückteil und einem damit durch Verschrauben koppelbaren vorderen Handstückteil zweiteilig aufgebaut ist,
wobei in einem ersten der beiden Handstückteile der Elektromotor (2-4) und in einem zweiten der beiden Handstückteile das elastische Mittel (7) des Einspannmechanismus (5, 7) angeordnet ist, entgegen dessen Federkraft das Werkzeug (8) in den Einspannmechanismus (5, 7) einspannbar ist,
wobei der Einspannmechanismus eine Spannzange (5) aufweist, die bei Verdrehen eines Handstückteils gegenüber dem anderen Handstückteil in Längsrichtung relativ zu der Außenhülle der Welle (10) und entgegen der Federkraft des elastischen Mittels (7) verschoben werden kann, so daß ein Werkzeug (8), welches sich in der Spannzange befindet, kraftschlüssig eingespannt wird,
**dadurch gekennzeichnet,**
**dass** die Wellenanordnung durch eine einstückig ausgestaltete Welle (10) gebildet ist, auf der sowohl der Elektromotor (2-4) als auch der Einspannmechanismus (5, 7) angeordnet sind,
**dass** die einstückige Welle (10) lediglich an zwei Lagerstellen (14, 15) des Arbeitshandstücks (1) gelagert ist,
und **dass** eine Lagerstelle an dem dem hinteren Handstückteil abgewandten Ende des vorderen Handstückteils angeordnet ist,
und **dass** die andere Lagerstelle an dem dem hinteren Handstückteil zugewandten Ende des vorderen Handstückteils angeordnet ist,
wobei der Elektromotor ein kollektorloser Gleichstrommotor mit einer Statorwicklung (3) und einem Rotormagnet (4) ist,
wobei die Statorwicklung (3) in dem ersten Handstückteil angeordnet ist, und wobei der Rotormagnet (4) derart an der einstückigen Welle (10) angebracht ist, dass im zusammengesetzten Zustand des Arbeitshandstücks (1) der Rotormagnet (4) in der Statorwicklung (3) angeordnet ist und eine Rotationsbewegung des Rotormagnets (4) auf die Welle (10) übertragen wird.

2. Arbeitshandstück nach Anspruch 1,
**dadurch gekennzeichnet,**
**dass** der Elektromotor an einem Ende des Arbeitshandstücks (1) über eine Versorgungsleitung (18) mit Strom versorgt wird.

3. Arbeitshandstück nach einem der Ansprüche 1 oder 2,
**dadurch gekennzeichnet,**
**dass** das erste Handstückteil an dem versorgungsleitungsseitigen Ende des Arbeitshandstücks (1) und das zweite Handstüclcteil an dem werkzeugseitigen Ende des Arbeitshandstücks (1) angeordnet ist.

4. Arbeitshandstück nach Anspruch 2 und Anspruch 3,
**dadurch gekennzeichnet,**
**dass** an demjenigen Handstückteil, welches am versorgungsleitungsseitigen Ende des Arbeitshandstücks (1) angeordnet ist, eine abnehmbare Abdeckung (22) vorgesehen ist, in welche die Versorgungsleitung (18) hineingeführt ist.

5. Arbeitshandstück nach einem der vorherigen Ansprüche,
**dadurch gekennzeichnet,**
**dass** jede Lagerstelle (14-16) durch ein Kugellager gebildet ist.

## Claims

1. A dental-technical working handpiece (1) for the operation of a tool (8) which can be coupled with the working handpiece (1) at its forward end,
having an electric motor (2-4),
having a chucking mechanism (5, 7), which has an elastic means (7) against the spring force of which the tool (8) can be clamped in the chucking mechanism (5,7) in a force-locking manner,
and having a shaft arrangement (10) in order to transfer a rotational movement of the electric motor (2-4) via the chucking mechanism (5, 7) to the clamped tool (8),
wherein the working handpiece (1) is constructed in two parts with a rearward handpiece part and a forward handpiece part that can be coupled therewith by screwing,
wherein the electric motor (2-4) is arranged in a first of the two handpiece parts, and the elastic means (7) of the chucking mechanism (5, 7), against the spring force of which the tool (8) can be clamped in the chucking mechanism (5, 7), is arranged in a second of the two handpiece parts,
wherein the chucking mechanism has a collet chuck (5), which, when one handpiece part is turned with respect to the other handpiece part, can be displaced in the longitudinal direction relative to the outer casing of the shaft (10) and against the spring force of the elastic means (7) so that a tool (8), which is located in the collet chuck, is clamped in a force-locking manner,
**characterized in that**
the shaft arrangement is formed by means of a shaft (10) configured in one piece, on which both the electric motor (2-4) and also the chucking mechanism (5, 7) are arranged,
the one-piece shaft (10) is mounted only at two bearing points (14, 15) of the working handpiece (1),
and one bearing point is arranged at the end of the forward handpiece part away from the rearward handpiece part,
and the other bearing point is arranged at the end of the forward handpiece part towards the rearward handpiece part,
wherein the electric motor is a collectorless d.c. motor having a stator winding (3) and a rotor magnet (4),
wherein the stator winding (3) is arranged in the first handpiece part, and wherein the rotor magnet (4) is so mounted on the one-piece shaft (10) that in the assembled condition of the working handpiece (1) the rotor magnet (4) is arranged in the stator winding (3) and a rotational movement of the rotor magnet (4) is transferred to the shaft (10).

2. A working handpiece according to claim 1,
**characterized in that**
the electric motor is supplied with current via a supply line (18) at one end of the working handpiece (1).

3. A working handpiece according to one of claims 1 or 2,
**characterized in that**
the first handpiece part is arranged at the end of the working handpiece (1) on the supply-line side, and the second handpiece part is arranged at the end of the working handpiece (1) on the tool side.

4. A working handpiece according to claim 2 and claim 3,
**characterized in that**
provided on that handpiece part which is arranged at the end of the working handpiece (1) on the supply-line side there is a removable cover (22) into which the supply line (18) is carried.

5. A working handpiece according to one of the previous claims,
**characterized in that**
each bearing point (14-16) is formed by means of a ball bearing.

## Revendications

1. Pièce à main (1) dentaire servant à faire fonctionner un outil (8) pouvant être couplé par son extrémité avant à la pièce à main (1),
comportant un moteur électrique (2-4),
comportant un mécanisme de serrage (5, 7) qui présente un moyen élastique (7), contre la force de rappel duquel l'outil (8) peut être serré à force dans le mécanisme de serrage (5, 7),
et comportant un ensemble d'arbres (10) afin de transmettre un mouvement de rotation du moteur électrique (2-4) sur l'outil (8) serré par l'intermédiaire du mécanisme de serrage (5, 7),
sachant que la pièce à main (1) est construite en deux parties avec une partie de pièce à main arrière et une partie de pièce à main avant pouvant être couplée à cette dernière par vissage,
sachant qu'est disposé dans l'une des deux parties de pièce à main le moteur électrique (2-4) et qu'est disposé dans la deuxième partie de pièce à main le moyen élastique (7) du mécanisme de serrage (5, 7), contre la force de rappel duquel l'outil (8) peut être serré dans le mécanisme de serrage (5, 7), sachant que le mécanisme de serrage présente une pince de serrage (5), qui peut être déplacée par coulissement, lors de la rotation d'une partie de pièce à main par rapport à l'autre partie de pièce à main, dans la direction longitudinale par rapport à la douille extérieure de l'arbre (10) et contre la force de rappel du moyen élastique (7) de sorte qu'un outil (8) se trouvant dans la pince de serrage est serré à force,
**caractérisée en ce**
**que** l'ensemble d'arbres est formé par un arbre (10) configuré d'un seul tenant, sur lequel sont disposés aussi bien le moteur électrique (2-4) que le mécanisme de serrage (5, 7),
**que** l'arbre (10) d'un seul tenant est logé seulement au niveau de deux points d'appui (14, 15) de la pièce à main (1),
et **qu'**un point d'appui est disposé au niveau de l'extrémité de la partie avant de pièce à main, opposée à la partie arrière de pièce à main,
et **que** l'autre point d'appui est disposé au niveau de l'extrémité de la partie avant de pièce à main, tournée vers la partie arrière de pièce à main,
sachant que le moteur électrique est un moteur à courant continu sans collecteur équipé d'un enroulement de stator (3) et d'un aimant de rotor (4),
sachant que l'enroulement de stator (3) est disposé dans la première partie de pièce à main et sachant que l'aimant de rotor (4) est appliqué au niveau de l'arbre (10) d'un seul tenant de telle manière qu'à l'état monté de la pièce à main (1), l'aimant de rotor (4) est disposé dans l'enroulement de stator (3) et qu'un mouvement de rotation de l'aimant de rotor (4) est transmis sur l'arbre (10).

2. Pièce à main selon la revendication 1,
**caractérisée en ce**
**que** le moteur électrique est alimenté en courant par l'intermédiaire d'une conduite d'alimentation (18) au niveau d'une extrémité de la pièce à main (1).

3. Pièce à main selon l'une quelconque des revendications 1 ou 2,
**caractérisée en ce**
**que** la première partie de pièce à main est disposée au niveau de l'extrémité de la pièce à main (1) située côté conduite d'alimentation, et en ce que la deuxième partie de pièce à main est disposée au niveau de l'extrémité de la pièce à main (1) située côté outil.

4. Pièce à main selon la revendication 2 ou la revendication 3,
**caractérisée en ce**
**qu'**est prévu au niveau de la partie de pièce à main disposée au niveau de l'extrémité de la pièce à main (1) située côté conduite d'alimentation, un revêtement (22) pouvant être retiré, dans lequel est introduite la conduite d'alimentation (18).

5. Pièce à main selon l'une quelconque des revendications précédentes,
**caractérisée en ce**
**que** chaque point d'appui (14-16) est formé par un roulement à billes.
